Europäisches Patentamt

European Patent Office

Office européen des brevets

(19)

(11) EP 0 884 094 A2

(12) **EUROPEAN PATENT APPLICATION**

(43) Date of publication:
16.12.1998 Bulletin 1998/51

(51) Int Cl.$^6$: **B01D 53/50**

(21) Application number: 98850102.9

(22) Date of filing: 10.06.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 11.06.1997 SE 9702229

(71) Applicant: **GÖTAVERKEN MILJÖ AB**
**402 72 Göteborg (SE)**

(72) Inventor: **Nordhag, Love**
**417 29 Göteborg (SE)**

(74) Representative: **Örtenblad, Bertil Tore et al**
**Noréns Patentbyra AB**
**P.O. Box 10198**
**100 55 Stockholm (SE)**

(54) **A method of desulphurizing gases, such as flue gases from combustion plants**

(57)     The present invention relates to a method of desulphurizing gases, such as flue gases emanating from combustion plants, while using a purification plant that includes a scrubber (1) to which an alkali is supplied, and a following gypsum-forming plant (2) to which calcium hydroxide is supplied to form gypsum, wherein the scrubber washing liquid is regenerated and returned to the scrubber.

The invention is characterized in that after having filled the purification plant with water and started-up the plant, the sulphur content is caused to reach such a value that when calcium hydroxide is supplied to the gypsum-forming plant (2), the sulphate content in relation to the amount of calcium hydroxide supplied will give a superstoichiometric ratio of $SO_4/Ca$ in the gypsum-forming plant, this superstoichiometric ratio being maintained during the operation of the plant.

*Fig.1*

EP 0 884 094 A2

**Description**

The present invention relates to a method of desulphurizing sulphur-containing gases. The invention is primarily concerned with the desulphurization of flue gases from combustion plants, although it is not restricted to this area of use. For instance, the method may also be used to purify sulphur-containing gases emanating from chemical process industries.

It is known desulphurize flue gases that emanate from combustion plants, by means of a so-called double-alkali process. The process equipment includes a scrubber in which there is used a sodium-based alkali that gives a clear scrubber solution. When regenerating the scrubber liquid, calcium hydroxide or calcium carbonate is added in an external gypsum-forming plant. The gypsum slurry is treated separately from other slurry in the flue gas purification plant.

There are two variants of the double-alkali process. A first of these variants is designated "Concentrated mode" and is used when burning fuels that have a high sulphur content, i.e. a sulphur content of 3-4% corresponding to 15-20 grams $SO_2/m^3$. This high sulphur content of the flue gas results in a high ratio of $SO_2/O_2$ in the scrubber, meaning that sulphur in the aqueous phase will be present essentially as sulphite. Sodium sulphite and to some extent calcium sulphite are formed within the scrubber. Sodium sulphite is readily dissolved and does not result in precipitation in the scrubber. Although calcium sulphite is not readily dissolved, it does not cause gypsum to form in the scrubber. Calcium sulphite that has settled or precipitated in the scrubber can be dissolved by lowering the pH. The oxidation of sulphite to sulphate and the formation of gypsum takes place outside the scrubber, in an oxidation and gypsum-forming plant.

When testing this process on fuels that have a low sulphur content in accordance with the second of these variants, designated "Dilute mode", where the sulphur content was 0.1-0.2%, high oxidation of sulphite to sulphate took place in the scrubber and scaling occurred, i.e. gypsum was formed. When regenerating the scrubber solution externally of the scrubber, the scaling problem can be reduced by using two series-coupled water purification stages. The first stage includes a gypsum-forming plant and the second stage is a softening stage in which the calcium content is lowered by the formation of limestone. Softening can be effected by adding sodium carbonate or by absorbing $CO_2$ in an alkaline solution.

Calcium carbonate has a lower solubility than $CaSO_4$, meaning that the calcium carbonate will be too low for gypsum to form. The system using two series-connected water purification stages, however, is space consuming and the installation costs are not viable in the case of low desulphurizing requirements.

These problems relating to the purification of flue gases that have low sulphur contents is solved by means of the present invention.

The invention provides a method of desulphurizing gases, such as flue gases emanating from combustion plants, while using a purification plant that includes a scrubber to which an alkali is delivered, and a subsequent gypsum-forming plant to which calcium hydroxide is delivered so as to form gypsum, wherein the scrubber washing liquor is regenerated and returned to the scrubber, and wherein the invention is characterised in that after having filled the plant with water and started-up the purification plant, the sulphur content is caused to reach a value such that when calcium hydroxide is delivered to the gypsum-forming plant the sulphate content in relation to the amount of calcium hydroxide delivered will give a superstoichiometric ratio of $SO_4/Ca$ in the gypsum-forming plant, this superstoichiometric ratio being maintained during operation of the plant.

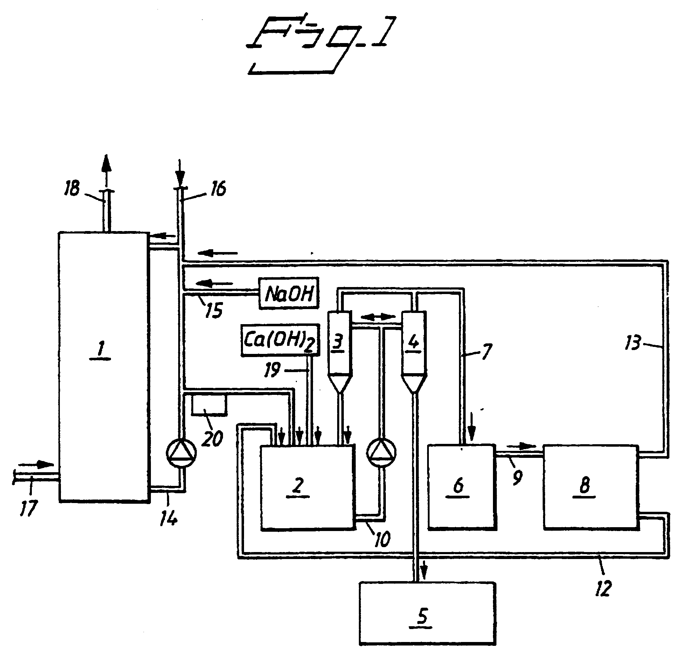

The invention will now be described in more detail with reference to an exemplifying embodiment of a plant in which the invention is applied and also with reference to the accompany drawing, in which Figure 1 is a process schema.

Figure 1 is a diagrammatic presentation of a purification plant in which the inventive method is applied. The method is primarily concerned with the desulphurization of flue gases emanating from combustion plants in which domestic waste is incinerated, although the method is not limited to this particular use but can be used to desulphurize flue gases that derive from other sources.

The purification plant includes a scrubber 1 to which an alkali is supplied, and a following gypsum-forming plant 2 to which calcium hydroxide is supplied to form gypsum. The scrubber 1 is of a conventional kind, in which the flue gases meet washing liquid in contraflow. It is preferred to use a scrubber that contains packing bodies. Located downstream of the gypsum-forming plant 2 are two separators 3, 4, where gypsum separated from one separator 3 is returned to the gypsum-forming reactor and where gypsum separated from the other separator is passed to a slurry treatment tank 5. The gypsum slurry passed to the slurry treatment tank can be passed to a further treatment station where it is washed and dried on vacuum belt filters, for instance.

The separators 3, 4 are suitably of a known kind, such as hydrocyclones. The gypsum separated in the hydrocyclones is comprised of coarse particles. The washing liquid that remains after separation and that contain fine gypsum fractions is pumped to a flocculation tank 6 through a conduit 7 and thereafter to a sedimentation tank 8 through a conduit 9. The gypsum-forming plant includes a conduit 10 in which there is provided a pump for pumping gypsum-containing liquid to the separators 3, 4.

Sediment is returned to the gypsum-forming plant through a conduit 12 and subsequent to the formation of further gypsum, resulting from the growth of the fine fractions, the gypsum is removed and passed to the slurry treatment tank 5. Regenerated washing liquid is passed from the sedimentation tank 8 to the scrubber 1, through a conduit 13.

The scrubber is a recycling type scrubber, where recirculation of liquid is effected through a conduit 14 that includes a pump to this end.

Water is withdrawn from the purification plant. The volume of water withdrawn is governed by the impurity content of, e.g., chloride, fluoride and zinc, or by the incoming water flow, and is drained from reject water in the hydrocyclone 4 to the slurry treatment tank. Recirculation of the process water through the conduit 13 results in a low withdrawn water volume.

The term sodium scrubbing is used when descaling with a clear scrubber solution. The alkali concerned is sodium hydroxide, sodium sulphite and sodium carbonate. Sodium also exists as the salts of sodium chloride, sodium fluoride and sodium sulphate. The sulphate is separated as gypsum. The chloride and fluoride contents, however, must be adjusted by bleeding-off scrubber liquid. The withdrawn water therefore results in a sodium loss and a sulphate loss that must be compensated for by adding sodium hydroxide, sodium sulphite or sodium carbonate and sodium sulphate respectively. In the illustrated embodiment, sodium hydroxide is added through a conduit 15. What has been said above with respect to the sodium compounds may, instead, apply to magnesium or potassium, which can be used analogously instead of sodium.

In the Figure 1 embodiment, water is delivered to the scrubber through a conduit 16. Flue gases are led into the scrubber through a passageway 17, and exit from the scrubber through a passageway 18.

According to the invention, the sulphate content is caused to be high at the start of the process. This can also be achieved by allowing the sulphate content to build-up during a given process time, for instance over one or more weeks, depending on the concentration of sulphur in the flue gas and the amount of sodium hydroxide that is added. No calcium hydroxide is added during this start period.

However, it is preferred to add sulphate to the purification plant initially, after having filled the plant with water. This is effected through the conduit 16. Calcium hydroxide is also delivered to the gypsum-forming plant, through a conduit 19. When calcium oxide is added, the sulphate content is brought to such a high level as to obtain a superstoichiometric ratio of $SO_4Ca$, this ratio being maintained in the gypsum-forming plant. This means that all formation of gypsum will take place in the gypsum-forming plant 2, therewith completely avoiding scaling in the scrubber and the deposit of gypsum at other locations in the purification plant.

According to one highly preferred embodiment of the invention, the mole ratio $SO_4/Ca$ in the water phase is caused to be about 10 in the gypsum-forming plant as a desired standard value, or guide value. This value, however, may vary between about 5 and 60.

According to one preferred embodiment, the sulphate is caused to be sodium sulphate.

However, according to an alternative embodiment, the sulphate is caused to be either magnesium sulphate or potassium sulphate.

The invention will now be described with reference to the embodiment in which sodium is used. It will be understood, however, that magnesium or potassium may be used equally as well, and consequently what is said below with respect to sodium can be replaced analogously with magnesium or potassium.

The following reaction takes place when $SO_2$ in the flue gas meets water:

$$SO_2 + H_2O \rightarrow H^+ + HSO_3^- \qquad (1)$$

The following reaction also takes place:

$$NaOH + H^+ \rightarrow Na^+ H_2O \qquad (2)$$

The following equilibrium reactions occur:

$$H_2SO_3 \longleftrightarrow H^+ + HSO_3^- \longleftrightarrow 2H^+ + SO_3^{2-} \qquad (3)$$

$SO_3^{2-}$ is the active alkali in the process. In order to obtain a high concentration of $SO_3^{2-}$, it is necessary to raise the pH value in comparison with the pH given by the flue gas. This is achieved through the reaction (2) above. The reaction taking place with the active alkali is:

$$SO_3^{2-} + SO_2 + H_2O \rightarrow 2 HSO_3^- \qquad (4)$$

The sulphite is thereafter oxidised to sulphate. The degree of oxidation is difficult to control, although it can be controlled to some extent through the pH value and through an air surplus in the combustion process.

According to one preferred embodiment, the degree of oxidation of sulphite to sulphate in the scrubber is caused to be greater than 20%, preferably about 90%.

The aforesaid reactions means that sulphur will exit the scrubber in the form of $Na_2SO_4$ and $Na_2SO_3$. $Na_2SO_3$ is preferably oxidised to $Na_2SO_4$ in an appropriate, known oxidation tank 20 positioned between the scrubber and the gypsum-forming plant 2.

The following reaction will take place in the gypsum-forming plant 2 as a result of adding calcium hydroxide to said plant:

$$Na_2SO_4 + Ca(OH)_2 \rightarrow CaSO_4 + 2NaOH \qquad (5)$$

The gypsum formed is separated-out in the aforedescribed way. Thus, NaOH is regenerated by this process, and returned to the scrubber.

The formation of all gypsum will take place in one location in the plant, as a result of maintaining a high sulphate content in the plant and, at the same time, causing the mole ratio $SO_4/Ca$ to be superstoichiometric.

It will be evident from the aforegoing that the present invention solves the problem mentioned in the introduction with respect to scaling at low sulphur concentrations in fuel and flue gases.

Although the invention has been described above with reference to various embodiments, it will be understood that features may vary. For instance, the washing liquid can be regenerated in another way. Furthermore, combinations of sodium, potassium or magnesium can be used in an analogous manner.

The present invention is therefore not restricted to the aforedescribed exemplifying embodiments thereof, since variations can be made within the scope of the following Claims.

**Claims**

1. A method of desulphurizing gases, such as flue gases emanating from combustion plants, while using a purification plant that includes a scrubber (1) to which an alkali is supplied, and a following gypsum-forming plant (2) to which calcium hydroxide is supplied to form gypsum, wherein the scrubber washing liquid is regenerated and returned to the scrubber, **characterised** in that after having filled the purification plant with water and started-up the plant, the sulphur content is caused to reach such a value that when calcium hydroxide is supplied to the gypsum-forming plant (2), the sulphate content in relation to the amount of calcium hydroxide supplied will give a superstoichiometric ratio of $SO_4/Ca$ in the gypsum-forming plant, this superstoichiometric ratio being maintained during the operation of the plant.

2. A method according to Claim 1, **characterised** in that a sulphate is supplied initially to the purification plant, so as to obtain a high sulphate content.

3. A method according to Claim 1, **characterised** in that the sulphate content is caused to build-up over a given operating time that depends on the sulphur content of the flue gas and the amount of sodium hydroxide supplied.

4. A method according to Claim 1, 2 or 3, **characterised** in that the mole ratio $SO_4/Ca$ is brought to 10 as an intended standard value in the water phase in the gypsum-forming plant.

5. A method according to Claim 1, 2, 3 or 4, **charac-** **terised** in that said sulphate is caused to be sodium sulphate.

6. A method according to Claim 1, 2, 3 or 4, **characterised** in that said sulphate is caused to be one of the sulphates magnesium sulphate or potassium sulphate.

7. A method according to Claim 1, 2, 3, 4, 5 or 6, **characterised** in that the degree of oxidation of sulphite to sulphate in the scrubber (1) is caused to be greater than 20%, preferably about 90%.

Fig. 1